# EUROPÄISCHE PATENTSCHRIFT

(11) **EP 2 280 183 B1**
(45) Veröffentlichungstag und Bekanntmachung des Hinweises auf die Patenterteilung: **27.03.2013**
(21) Anmeldenummer: 09166434.2
(22) Anmeldetag: 27.07.2009
(51) Int. Cl.: F16D 25/08

(54) **Gezogene Reibungskupplung mit integriertem Ausrücker**
Pull-type friction coupling with integrated actuator
Embrayage de friction tiré doté d'un actioneur intégré

(43) Veröffentlichungstag der Anmeldung: 02.02.2011
(73) Patentinhaber: ZF Friedrichshafen AG, 88038 Friedrichshafen (DE)
(72) Erfinder: Wittholz, Jan, 97506 Grafenrheinfeld (DE)

(56) Entgegenhaltungen:
- WO-A1-92/08063
- DE-A1- 2 217 942
- DE-A1- 19 716 641
- DE-A1-102004 008 032

## Beschreibung

Die Erfindung betrifft eine Reibungskupplung, welche speziell im Rennsport eingesetzt werden kann, mit einer integrierten hydraulischen Ausrückeinrichtung.
Die Erfindung betrifft speziell gezogene Reibungskupplungen, was bedeutet, dass zum Ausrücken der Kupplungseinrichtung eine Federanordnung nicht in Richtung Anpressplatte der Kupplung gedrückt wird, sondern von ihr weggezogen wird.

Solche Reibungskupplungen sind bereits aus der DE 10 2004 008 032 A1 bekannt. Hierbei wird die zum Ausrücken nötige Axialkraft innerhalb der Reibungskupplung am Kupplungsgehäuse abgestützt, so dass der Ausrückvorgang im Wesentlichen axialkraftfrei erfolgt und die Kurbelwellenlagerung des Motors keine Axialkräfte, weiche vom Betätigen der Kupplung herrühren, aufnehmen muss.

Nachteilig bei der bekannten Ausführung ist der relative aufwändige Aufbau der Kupplung und das große Druckfluidvolumen, weiches nötig ist, um die Kupplung auszurücken. Zum Betätigen ist hier ein speziell auf die Kupplungseinrichtung abgestimmter, großvolumiger Geberzylinder des Betätigungssystems notwendig, welcher bei einer Kupplungspedalbetätigung das nötige Volumen in den integrierten Nehmerzylinder der Kupplungseinrichtung schiebt.
Speziell für Renneinsätze werden Kupplungen öfter gewechselt und für den speziellen Renneinsatz zwischen einer gezogenen und gedrückten Kupplung ausgewählt.
Wird nun bei einem Fahrzeug, weiches mit der bekannten gezogenen Kupplungen und einem angepaßten Geberzylinder ausgestattet ist, lediglich die gezogene Kupplung gegen eine herkömmliche gedrückte Kupplung ausgewechselt, kann infolge des für die gedrückte Kupplung zu großvolumig dimensioniertem Geberzylinder die Federanordnung der Kupplung axial zu weit verschwenkt und damit überdrückt werden, was zu Beschädigungen der Federanordnung führt.

Aufgabe der Erfindung ist es, die beschriebenen Nachteile zu beseitigen und den Kupplungsaufbau zu vereinfachen.

Zur Lösung dieser Aufgabe ist eine Reibungskupplung nach dem Anspruch 1 vorgesehen.
Erfindungsgemäß wird die Druckfluidkammer radial außen und radial innen direkt vom Außenring der zweiten Wälzlageranordnung begrenzt. Es kann somit auf die Zwischenschaltung eines separaten Bauteils, zum Beispiel eines Ringkolbens, verzichtet werden, weiches an der zweiten Wälzlageranordnung angeordnet ist. Vorteilhaft hierbei ist, dass der radiale Außendurchmesser auf den Außenradius des Außenrings begrenzt werden kann.
Der radial äußere Durchmesser der Druckfluidkammer entspricht somit dem Außendurchmesser der zweiten Wälzlageranordnung. Hierdurch ist es möglich die hydraulisch wirksame Querschnittsfläche des Ringkolbens, welcher vom Außenring gebildet wird, kleiner als 1500 mm² auszubilden. Höchstvorzugsweise ist die hydraulisch wirksame Querschnittsfläche kleiner als 1300 mm² ausgebildet. Erfindungsgemäß liegt die hydraulisch wirksame Querschnittsfläche damit weit unterhalb von bekannten integrierten Ausrücksystemen und damit im Bereich der hydraulisch wirksamen Querschnittsfläche von Nehmerzylindern eines nicht integrierten Geber-Nehmerzylinder-Systems.

Eine bevorzugte Ausführungsform sieht vor, dass die Ausrückeinrichtung nur über die erste Wälzlageranordnung bezüglich der Kupplungsgehäuseanordnung gelagert und zentriert ist, wobei die Ausrückeinrichtung ein nichtrotierendes Gehäuse umfasst, weiches den Innenring der ersten Wälzlageranordnung trägt.
Vorteilhaft hierbei ist, dass die Montage relativ einfach erfolgen kann, da die Ausrückeinrichtung keine feste Verbindung zum Kupplungsgehäuse oder Getriebegehäuse aufweist und lediglich über den hydraulischen Anschluss und die zugehörige Anschlussleitung am Rotieren gehindert wird. Ein Achsversatz oder Überbestimmung der Lagerung ist somit ausgeschlossen. Das System ist somit problemlos montierbar und quasi selbstzentrierend.

Gemäß der Erfindung umfasst die Ausrückeinrichtung ein nichtrotierendes Gehäuse, weiches stationäre Dichtelemente aufweist, die in Nuten angeordnet sind und den Außenradius und den Innenradius der druckbeaufschlagten Fläche der Fluiddruckkammer bestimmen, wobei der Außenring der zweiten Wälzlageranordnung zwei um eine radiale Stufe versetzte Außenumfangsflächen aufweist, welche dichtend und axial verschiebbar an den Dichtelementen geführt sind. Vorzugsweise sind beide Nuten in einer Innenumfangsfläche des Gehäuses angeordnet. Hierdurch können die beiden axial versetzten Außenumfangsflächen des Außenrings in ihrer Materialstärke sehr dünnwandig und in Form einer Hülse ausgestaltet werden, womit sowohl der Außenradius als auch der Innenradius der druckbeaufschlagten Fläche minimiert werden kann. Der Außenring ist hierzu so ausgestaltet, dass sich an den Teil des Außenrings, weicher die Laufbahn für die Wälzkörper aufweist, ein sich nach radial innen erstreckendes Seitenteil anschließt, weiches wiederum in einen axial erstreckenden Hülsenteil übergeht, weicher vorzugsweise denselben Innendurchmesser aufweist wie der Innenring der Wälzlageranordnung.

Ein weiterer vorteilhafter Aspekt der Erfindung sieht vor, dass bei vollständig ausgerückter Kupplung eine erste Dichtungsfläche des Außenrings der zweiten Wälzlageranordnung axial über das nichtrotierende Gehäuse hinaussteht, wobei ein deckelartiges elastisches Element am Gehäuse und an der der zweiten Wälzlageranordnung zum Schutz der Dichtungsfläche anliegt. Vorzugsweise ist eine zweite Dichtungsfläche des Außenrings der zweiten Wälzlageranordnung so angeordnet, dass bei vollständig eingerückter Kupplung die zweite Dichtungsfläche zumindest bereichsweise radial innerhalb der ersten Wälzlageranordnung angeordnet ist.
Vorteilhaft hierbei ist, dass der axiale Bauraumbedarf verringert ist gegenüber Konstruktionen weiche ein Gehäuse aufweisen dass das gesamte Kolbenhemd bedeckt. Das elastische Element ist vorzugsweise als Gummideckel ausgebildet und dient dazu, die freie Kolbenfläche, also den Außenumfang des Außenrings vor Verschmutzungen, speziell Stäuben aus der Kupplung zu schützen.

Eine weitere vorteilhafte Ausgestaltung der Erfindung sieht vor, dass der Ausrückring im Bereich der Federanordnung (22) sich radial nach außen erstreckt und radial außerhalb der Wälzlageranordnungen am Anlagepunkt A an der Federanordnung angreift.
Vorteilhaft hierbei ist, dass der Krafteinleitungsradius des Ausrückringes näher an der Anpressplatte liegt, wodurch sich Elastizitäten im Bereich der Federzungen der Federanordnung weniger stark auf den Ausrückweg auswirken.

Erfindungsgemäß ist die Konstruktion der gezogenen Kupplung dermaßen, dass die Federanordnung radial außen mittelbar oder unmittelbar an der Kupplungsgehäuseanordnung am Anlagepunkt B anliegt und die Anpressplatte zwischen den Anlagepunkten A und B am Anlagepunkt C anliegt.
Eine besonders vorteilhafte Ausgestaltung sieht hierbei vor, dass der Abstand vom Anlagepunkt A zum Anlagepunkt C, Strecke AC, und der Abstand vom Anlagepunkt B zum Anlagepunkt C, Strecke BC, im Wesentlichen gleich groß sind.
Da die Federanordnung an dem Anlagepunkt A zum Ausrücken verschwenkt wird, ergibt sich hieraus ein vorteilhaftes Hebelverhältnis von 1:2 . Wird der Anlagepunkt A noch weiter nach radial außen in Richtung Anlagepunkt C verlagert, ergibt sich ein bezüglich des Ausrückweges kurzer Ausrückweg, welcher sich vorteilhaft auf den Verschiebeweg des Ringkolbens auswirkt, da dieser entsprechend kurz gehalten werden kann und somit die axiale Baulänge der Ausrückeinrichtung weiter verringert werden kann.

Mit kürzerem Hebelverhältnis steigt zwar die Ausrückkraft an, bzw. der Fluiddruck welcher auf den Ringkolben wirken muss an, um die Reibungskupplung auszurücken, im Gegenzug verringert sich jedoch der Ausrückweg überproportional, da die Federzungen aufgrund des kürzeren Hebelarmes sich weniger durchbiegen. Hierdurch verringert sich die aufzubringende Ausrückarbeit merklich gegenüber der Ausrückarbeit bei größerem Hebel und kleinerer Ausrückkraft, da weniger Energie in die Federzungen gesteckt werden muss, ohne dass sich die Anpressplatte bewegt.

Eine besonders vorteilhafte Ausgestaltung der Reibungskupplung sieht vor, dass die Federanordnung radial außen mittelbar oder unmittelbar an der Kupplungsgehäuseanordnung am Anlagepunkt B auf einem Radius zwischen 130 mm und 150 mm anliegt und der Abstand zwischen den Anlagepunkten A und B kleiner 40 mm beträgt. Höchstvorzugsweise liegt der Anlagepunkt B auf einem Radius zwischen 135 mm und 145 mm und der Abstand zwischen den Anlagepunkten A und B ist kleiner als 36 mm.

Ein weiterer vorteilhafter Aspekt der Erfindung sieht vor, dass die Kupplungsgehäuseanordnung einen mechanischen Anschlag zur Begrenzung des Ausrückweges aufweist, welcher im radialen Bereich des Anlagepunktes des Ausrückringes an der Federanordnung angeordnet ist und so ausgelegt ist, dass bei Überschreiten eines vorgegebenen Ausrückweges die Federanordnung am Anschlag zum Anliegen kommt. Vorteilhaft hierbei ist, dass eine versehentliches Überdrücken und Durchbiegen der Federanordnung zuverlässig verhindert wird, falls aufgrund eines nicht angepassten Geberzylinders am Kupplungspedal zuviel Druckfluidvolumen in die Druckfluidkammer gepresst würde. Weiterhin kann somit auf eine separate Aurückwegbegrenzung des Ringkolbens, an welcher der Ringkolben anschlagen würde, verzichtet werden. Ein solcher Anschlag für den Ringkolben würde den axialen Bauraum der Ausrückeinrichtung erheblich vergrößern.

Ein weiteres vorteilhaftes Merkmal des Ausrückringes sieht vor, dass radial außerhalb des Anlagepunktes B des Ausrückringes an der Federanordnung der Ausrückring axiale Vorsprünge aufweist, welche in zumindest einige der Zwischenräume zwischen den Federzungen der Federanordnung greifen. Hierdurch wird eine Verdrehsicherung zwischen Ausrückring und Federanordnung dargestellt. Weiterhin kann erfindungsgemäß vorgesehen sein, dass die axialen Vorsprünge des Ausrückringes die Federzungen durchgreifen und anstelle der Federanordnung zur Begrenzung des Ausrückweges dienen und bei Überschreiten eines vorgegebenen Ausrückweges an einem Anschlag der Kupplungsgehäuseanordnung zum Anliegen kommen.

Die Erfindung wird im Folgenden anhand einer Figur dargestellt

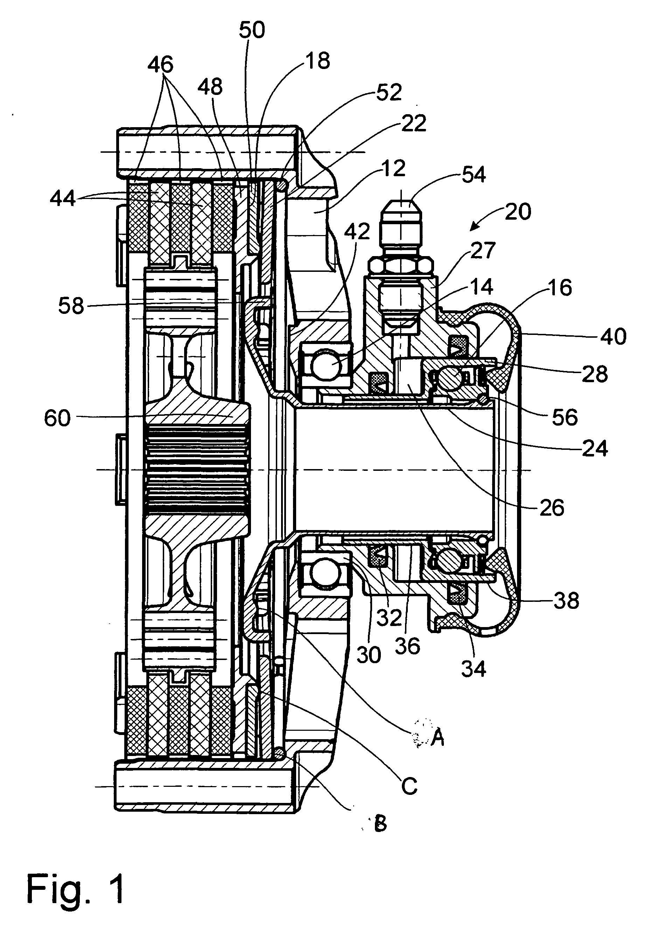

Figur 1 zeigt eine Kupplungseinrichtung für den Rennsport, welche am Außendurchmesser der Innenlamellen des Lamellenpaketes 140 mm misst. Das Lamellenpaket besteht aus den beiden Innenlamellen 44, und drei Außenlamellen 46. Die Anpressplatte 18 ist zweiteilig ausgebildet und besteht aus einer Grundplatte 48 und einem Anpressring 50. Das Lamellenpaket wird über den Anpressring 50 von der Federanordnung 22, welche als Membranfeder ausgebildet ist, zusammengedrückt, wobei die Membranfeder sich radial außen an einem am Kupplungsgehäuse 12 anliegenden Drahtring 52 abstützt, welcher den Anlagepunkt A bildet. Das vom Motor übertragenen Drehmoment wird in üblicher Weise über das rotierende Kupplungsgehäuse 12 auf die Außenlamellen 46, und von dort auf die Innenlamellen 44 und die Nabe 60 übertragen, welche auf der Getriebeeingangswelle aufgesteckt ist.

An der rotierenden Kupplungsgehäuseanordnung 12 ist die erste, als Kugellager ausgebildete Wälzlageranordnung angeordnet, welche über den Innenring 30 die nicht rotierende Ausrückeinrichtung 20 lagert. Das Kugellager ist hierbei in einer vom Gehäuse gebildeten einseitig offenen Nut, welche die Sitzfläche und einen axialen Anschlag bildet, angeordnet. Die Ausrückeinrichtung 20 umfasst einen hydraulischen Anschluß 54 für Druckfluid, welcher über eine Druckleitung mit einem nicht dargestellten Geberzylinder hydraulisch verbindbar ist. Das Druckfluid wird vom hydraulischen Anschluss 54 über einen Kanal in die als Ringraum ausgebildete Druckfluidkammer 26 geleitet. Die Druckfluidkammer wird direkt gebildet vom Außenring 28 der als Kugellager ausgebildeten zweiten Wälzlageranordnung 16 und dem Gehäuse 27 der Ausrückeinrichtung 20. Die Ausrückeinrichtung 20 weist zwei Innenumfangsnuten zur Aufnahme der Dichtelemente 32, 34 auf. Die Dichtelemente 32, 34 dichten die Druckfluidkammer 26 radial außen und radial innen ab. Der Außenring 28 ist dermaßen gestaltet, dass er eine axiale Stufe aufweist, welche eine radial äußere Außenumfangsfläche 38 von einer radial inneren Außenumfangsfläche 36 abstuft. Die beiden Außenumfangsflächen 36, 38 stehen mit den beiden Dichtelementen 32, 34 in Dichteingriff und bilden die beiden Kolbenwände des Ringkolbens. Der Innenring der zweiten Wälzlageranordnung 16 ist mittels eines Runddrahtsprengringes 56, der in einer entsprechenden Nut am Außenumfang des Ausrückringes 24 angeordnet ist, axial abgestützt. Die Druckfluidkammer 26 weist eine hydraulisch wirksame Druckfläche am Außenring 28 von in etwa 1300 mm² auf. Durch diese kleine Ringfläche wird gewährleistet, dass in einem Fahrzeug mit üblichen Geberzylindern, welche einen maximalen Durchmesser von 1 Zoll aufweisen und einem typischen Hub von 18 mm der Ringkolben einen genügend großen Ausrückweg zum Ausrücken der Kupplung zurücklegt.

Hierzu tragen auch die relativ kurzen Membranfederzungen bei; die Membranfeder erstreckt sich vom Anlagepunkt A bis zum Anlagepunkt B nur maximal 36 mm.
Der Ausrückring 24 erstreckt sich an seiner der Kupplung zugewandten Seite nach radial außen und liegt an Anlagepunkt A an den Membranfederzungen an. Weiterhin erstrecken sich axiale Vorsprünge 58 des Ausrückringes 24 in die Zwischenräume der Membranfederzungen. Die Membranfederzungen kommen bei maximaler Ausrückbetätigung am axialen Anschlag 42 der Kupplungsgehäuseanordnung zum Anliegen, wodurch ein Überdrücken der Membranfeder verhindert wird.
Besonders vorteilhaft bei der erfindungsgemäßen Reibungskupplung ist die kurze axiale Baulänge der Ausrückeinrichtung 20. Dies wird dadurch realisiert, dass zum einen das Kolbenhemd des Ringkolbens 28, die Außenumfangsfläche 38, nicht vollkommen vom Gehäuse 27 umschlossen wird. Beim Ausrücken schiebt sich das Kolbenhemd axial aus dem Gehäuse 27 heraus. Um Verschmutzungen zu vermeiden ist ein elastisches Element 40 am Gehäuse dichtend befestigt, welches sich über das Kolbenhemd stülpt, die axiale Verschiebebewegung mitmacht und sich am Kugellager 16 abstützt. Die Abstützung kann sowohl am nicht drehenden Außenring erfolgen, wie auch am rotierenden Innenring. Vorzugsweise erfolgt die Abstützung wie in Figur 1 offenbart, jedoch am nicht drehenden Außenring. Das zweite Kolbenhemd des Außenrings 28, welches die Außenumfangsfläche 36 aufweist, ist zumindest bei komplett eingerückter Kupplung zumindest bereichsweise radial innerhalb und im axialen Bereich der ersten Wälzlageranordnung 14 angeordnet. Durch diese Kombination des herausragenden Kolbenhemdes einerseits und des sich unterhalb des ersten Kugellagers einschiebenden zweiten Kolbenhemdes andererseits ist das Gehäuse 27 in seiner axialen Erstreckung im Wesentlichen gleich lang wie der Außenring 28 mit seinen beiden Kolbenhemden. Weiterhin ist für die Staubproblematik von Vorteil, dass beide Wälzlageranordnungen 14, 16 außerhalb der Kupplung, und vom Lamellenpaket durch die Kupplungsgehäuseanordnung 12 abgeschirmt, angeordnet sind. Somit sind die beiden Lager weniger der vom Lamellenpaket erzeugten Hitze und Verschmutzung ausgesetzt.

### Bezugszeichenliste

12 Kupplungsgehäuseanordnung
14 erste Wälzlageranordnung
16 zweite Wälzlageranordnung
18 Anpressplatte
20 Ausrückeinrichtung
22 Federanordnung
24 Ausrückring
26 Druckfluidkammer
27 Gehäuse
28 Außenring
30 Innenring
32 Dichtelement
34 Dichtelement
36 Außenumfangsfläche
38 Außenumfangsfläche
40 elastisches Element
42 Anschlag
44 Innenlamellen
46 Außenlamellen
48 Grundplatte
50 Anpressring
52 Drahtring
54 hydraulischer Anschluß
56 Runddrahtsprengring
58 axiale Vorsprünge
60 Nabe

## Patentansprüche

1. Reibungskupplung, umfassend eine Kupplungsgehäuseanordnung (12), eine mit dieser drehfest und in Richtung einer Drehachse (A) bewegbar gekoppelte Anpressplatte (18), eine Federanordnung (22), durch welche die Anpressplatte (18) in Richtung Einkuppeln beaufschlagbar ist, wobei zum Ausrücken der Reibungskupplung die Federanordnung (22) an ihrem inneren Radialbereich mittels eines Ausrückringes (24) einer sich mittels einer ersten Wälzlageranordnung (14) axial am Kupplungsgehäuse abstützenden integrierten hydraulischen Ausrückeinrichtung (20), von der Anpressplatte axial weggezogen wird, und wobei die Ausrückeinrichtung eine zweite Wälzlageranordnung (16) umfaßt, welche radial außerhalb des Ausrückrings (24) angeordnet und mit diesem verkoppelt ist und bezüglich der ersten Wälzlageranordnung (14) axial verlagerbar ist, wobei zwischen den beiden Wälzlageranordnungen (14, 16) eine abgedichtete Druckfluidkammer (26) ausgebildet ist, welche mit Druckfluid beaufschlagbar ist,
**dadurch gekennzeichnet, dass** die Druckfluidkammer (26) radial außen und radial innen direkt vom Außenring (28) der zweiten Wälzlageranordnung (16) begrenzt wird, der einen Ringkolben bildet, und dass die Ausrückeinrichtung (20) ein nichtrotierendes Gehäuse (27) umfaßt, welches stationäre Dichtelemente (32, 34) aufweist, die in Nuten des Gehäuses (27) angeordnet sind und den Außenradius und den Innenradius der druckbeaufschlagten Fläche der Druckfluidkammer (26) bestimmen und wobei der Außenring (28) der zweiten Wälzlageranordnung (16) zwei um eine radiale Stufe versetzte Außenumfangsflächen (36, 38) aufweist, welche dichtend und axial verschiebbar an den Dichtelementen ( 32, 34) geführt sind.

2. Reibungskupplung nach Anspruch 1, **dadurch gekennzeichnet,**
**dass** die Ausrückeinrichtung (20) nur über die erste Wälzlageranordnung (14) bezüglich der Kupplungsgehäuseanordnung (12) gelagert und zentriert ist, wobei das nichtrotierende Gehäuse (27) den Innenring (30) der ersten Wälzlageranordnung trägt.

3. Reibungskupplung nach Anspruch 1, **dadurch gekennzeichnet,**
**dass** bei vollständig ausgerückter Kupplung eine Dichtungsfläche (38) des Außenrings (28) der zweiten Wälzlageranordnung (16) axial über das nichtrotierende Gehäuse (27) hinaussteht, wobei ein deckelartiges elastisches Element (40) am Gehäuse (27) und an der der zweiten Wälzlageranordnung (16) zum Schutz der Dichtungsfläche (38) anliegt.

4. Reibungskupplung nach Anspruch 1, **dadurch gekennzeichnet,**
**dass** der Ausrückring (24) im Bereich der Federanordnung (22) sich radial nach außen erstreckt und radial außerhalb der Wälzlageranordnungen (14, 16) am Anlagepunkt A an der Federanordnung (22) angreift.

5. Reibungskupplung nach Anspruch 4, **dadurch gekennzeichnet,**
**dass** die Federanordnung (22) radial außen mittelbar oder unmittelbar an der Kupplungsgehäuseanordnung (12) am Anlagepunkt B anliegt und die Anpressplatte (18) zwischen den Anlagepunkten A und B am Anlagepunkt C anliegt wobei die Abstände AC und BC im Wesentlichen gleich groß sind.

6. Reibungskupplung nach Anspruch 4, **dadurch gekennzeichnet,**
**dass** die Federanordnung (22) radial außen mittelbar oder unmittelbar an der Kupplungsgehäuseanordnung (12) am Anlagepunkt B auf einem Radius zwischen 130 mm und 150 mm anliegt und der Abstand zwischen den Anlagepunkten A und B kleiner 40 mm beträgt.

7. Reibungskupplung nach Anspruch 1, **dadurch gekennzeichnet,**
**dass** die Kupplungsgehäuseanordnung (12) einen mechanischen Anschlag (42) zur Begrenzung des Ausrückweges aufweist, welcher im radialen Bereich des Anlagepunktes des Ausrückringes (24) an der Federanordnung (22) angeordnet ist und so ausgelegt ist, dass bei Überschreiten eines vorgegebenen Ausrückweges die Federanordnung (22) am Anschlag (42) zum Anliegen kommt.

## Claims

1. Friction clutch, comprising a clutch housing arrangement (12), a pressure plate (18) coupled to said clutch housing arrangement in a rotationally conjoint manner and so as to be movable in the direction of an axis of rotation (A), and a spring arrangement (22) by means of which the pressure plate (18) can be acted on in the direction of clutch engagement, wherein for disengagement of the friction clutch, the spring arrangement (22) is, at its inner radial region, pulled away from the pressure plate axially by means of a disengagement ring (24) of an integrated hydraulic disengagement device (20) which is supported axially on the clutch housing via a first rolling bearing arrangement (14), and wherein the disengagement device comprises a second rolling bearing arrangement (16) which is arranged radially outside the disengagement ring (24) and which is coupled thereto and which is axially displaceable relative to the first rolling bearing arrangement (14), wherein a sealed pressure fluid chamber (26) which can be charged with pressure fluid is formed between the two rolling bearing arrangements (14, 16),
**characterized in that** the pressure fluid chamber (26) is delimited radially at the outside and radially at the inside directly by the outer ring (28) of the second rolling bearing arrangement (16), which outer ring forms an annular piston, and **in that** the disengagement device (20) comprises a non-rotating housing (27) which has static sealing elements (32, 34) which are arranged in grooves of the housing (27) and define the outer radius and the inner radius of the area, which is subjected to pressure loading, of the pressure fluid chamber (26), and wherein the outer ring (28) of the second rolling bearing arrangement (16) has two outer circumferential surfaces (36, 38) which are offset by a radial step and which are guided in a sealing and axially displaceable manner on the sealing elements (32, 34).

2. Friction clutch according to Claim 1, **characterized**
**in that** the disengagement device (20) is mounted and centred relative to the clutch housing arrangement (12) only by means of the first rolling bearing arrangement (14), wherein the non-rotating housing (27) bears the inner ring (30) of the first rolling bearing arrangement.

3. Friction clutch according to Claim 1, **characterized**
**in that**, when the clutch is fully disengaged, a sealing surface (38) of the outer ring (28) of the second rolling bearing arrangement (16) protrudes axially beyond the non-rotating housing (27), wherein a cover-like elastic element (40) bears against the housing (27) and against the second rolling bearing arrangement (16) in order to protect the sealing surface (38).

4. Friction clutch according to Claim 1, **characterized**
**in that** the disengagement ring (24) extends radially outward in the region of the spring arrangement (22) and engages on the spring arrangement (22) at the contact point A radially outside the rolling bearing arrangements (14, 16).

5. Friction clutch according to Claim 4, **characterized**
**in that** the spring arrangement (22) bears, radially at the outside, indirectly or directly against the clutch housing arrangement (12) at the contact point B, and the pressure plate (18) bears against the contact point C between the contact points A and B, wherein the spacings AC and BC are substantially equal.

6. Friction clutch according to Claim 4, **characterized**
**in that** the spring arrangement (22) bears, radially at the outside, indirectly or directly against the clutch housing arrangement (12) at the contact point B at a radius of between 130 mm and 150 mm, and the spacing between the contact points A and B is less than 40 mm.

7. Friction clutch according to Claim 1, **characterized**
**in that** the clutch housing arrangement (12) has a mechanical stop (42) for limiting the disengagement travel, said mechanical stop being arranged in the radial region of the contact point of the disengagement ring (24) against the spring arrangement (22) and being designed such that, when a predefined disengagement travel is exceeded, the spring arrangement (22) comes into contact with the stop (42).

## Revendications

1. Embrayage à friction, comprenant un agencement de carter d'embrayage (12), un plateau de pression (18) couplé de façon solidaire en rotation avec celui-ci et de façon mobile dans la direction d'un axe de rotation (A), un agencement de ressort (22) par lequel le plateau de pression (18) peut être poussé dans la direction d'embrayage, dans lequel, pour débrayer l'embrayage à friction, l'agencement de ressort (22) est écarté axialement du plateau de pression à son bord radial intérieur au moyen d'une bague de débrayage (24) d'un dispositif de débrayage hydraulique intégré (20) s'appuyant axialement sur le carter d'embrayage au moyen d'un premier agencement de palier de roulement (14), et dans lequel le dispositif de débrayage comprend un deuxième agencement de palier de roulement (16), qui est disposé radialement à l'extérieur de la bague de débrayage (24) et est couplé avec celle-ci et est déplaçable axialement par rapport au premier agencement de palier de roulement (14), dans lequel une chambre de fluide sous pression (26), qui peut être exposée à un fluide sous pression, est formée entre les deux agencements de palier de roulement (14, 16), **caractérisé en ce que** la chambre de fluide sous pression (26) est limitée radialement vers l'extérieur et radialement vers l'intérieur par la bague extérieure (28) du deuxième agencement de palier de roulement (16), qui forme un piston annulaire, et **en ce que** le dispositif de débrayage (20) comprend un carter non rotatif (27), qui présente des éléments d'étanchéité stationnaires (32, 34), qui sont disposés dans des rainures du carter (27) et qui déterminent le rayon extérieur et le rayon intérieur de la surface exposée à la pression de la chambre de fluide sous pression (26), et dans lequel la bague extérieure (28) du deuxième agencement de palier de roulement (16) présente deux surfaces périphériques extérieures décalées d'un étage (36, 38), qui sont guidées de façon étanche et axialement déplaçable sur les éléments d'étanchéité (32, 34).

2. Embrayage à friction selon la revendication 1, **caractérisé en ce que** le dispositif de débrayage (20) est monté et centré par rapport à l'agencement de carter d'embrayage (12) uniquement par le premier agencement de palier de roulement (14), dans lequel le carter non rotatif (27) porte la bague intérieure (30) du premier agencement de palier de roulement.

3. Embrayage à friction selon la revendication 1, **caractérisé en ce que**, lorsque l'embrayage est complètement débrayé, une surface d'étanchéité (38) de la bague extérieure (28) du deuxième agencement de palier de roulement (16) est axialement en saillie au-delà du carter non rotatif (27), dans lequel un élément élastique en forme de couvercle (40) est appliqué sur le carter (27) et sur le deuxième agencement de palier de roulement (16) pour la protection de la surface d'étanchéité (38).

4. Embrayage à friction selon la revendication 1, **caractérisé en ce que** la bague de débrayage (24) s'étend radialement vers l'extérieur dans la région de l'agencement de ressort (22) et agit sur l'agencement de ressort (22) au point d'appui A radialement à l'extérieur des agencements de palier de roulement (14, 16).

5. Embrayage à friction selon la revendication 4, **caractérisé en ce que** l'agencement de ressort (22) s'applique radialement à l'extérieur au point d'appui B, directement ou indirectement sur l'agencement de carter d'embrayage (12), et le plateau de pression (18) s'applique au point d'appui C entre les points d'appui A et B, dans lequel les distances AC et BC sont essentiellement de valeur égale.

6. Embrayage à friction selon la revendication 4, **caractérisé en ce que** l'agencement de ressort (22) s'applique radialement à l'extérieur au point d'appui B, directement ou indirectement sur l'agencement de carter d'embrayage (12), à un rayon compris entre 130 mm et 150 mm et la distance entre les points d'appui A et B est inférieure à 40 mm.

7. Embrayage à friction selon la revendication 1, **caractérisé en ce que** l'agencement de carter d'embrayage (12) présente une butée mécanique (42) destinée à limiter la course de débrayage, qui est disposée dans la région radiale du point d'appui de la bague de débrayage (24) sur l'agencement de ressort (22) et qui est conçue de telle manière que, en cas de dépassement d'une course de débrayage prédéterminée, l'agencement de ressort (22) vienne s'appliquer sur la butée (42).
